Europäisches Patentamt

European Patent Office

Office européen des brevets

(11) Numéro de publication : **0 318 355 B1**

# (12) FASCICULE DE BREVET EUROPEEN

(45) Date de publication du fascicule du brevet :
**18.03.92 Bulletin 92/12**

(51) Int. Cl.$^5$ : **B60N 2/02,** A47C 7/02,
A47C 7/46

(21) Numéro de dépôt : **88402864.8**

(22) Date de dépôt : **15.11.88**

(54) **Dispositif de rabattement d'aile latérale de siège et siège baquet pour véhicule automobile ou analogue comportant un tel dispositif.**

(30) Priorité : **26.11.87 FR 8716419**

(43) Date de publication de la demande :
**31.05.89 Bulletin 89/22**

(45) Mention de la délivrance du brevet :
**18.03.92 Bulletin 92/12**

(84) Etats contractants désignés :
**BE DE ES GB IT NL SE**

(56) Documents cités :
**FR-A- 2 276 798**
**GB-A- 1 367 628**

(56) Documents cités :
**PATENT ABSTRACTS OF JAPAN, vol. 10, no. 59 (M-459)[2116], 8 mars 1986, page 164 M 459; & JP-A-60 206 741 (NITSUSAN SHIYATAI K.K.) 18-10-1985**
**PATENT ABSTRACTS OF JAPAN, vol. 10, no. 59 (M-459)[2116], 8 mars 1986, page 164 M 459; & JP-A-60 206 742 (NITSUSAN SHIYATAI K.K.) 18-10-1985**

(73) Titulaire : **CESA COMPAGNIE EUROPEENNE DE SIEGES POUR AUTOMOBILES**
**20, rue Paul-Vaillant-Couturier**
**F-92300 Levallois-Perret (FR)**

(72) Inventeur : **Fourrey, François**
**Rue du Petit Chênois**
**F-25200 Montbeliard (FR)**

(74) Mandataire : **Mestre, Jean et al**
**c/o CABINET LAVOIX 2, place d'Estienne d'Orves**
**F-75441 Paris Cédex 09 (FR)**

**Description**

Les sièges baquet sont de plus en plus appréciés des utilisateurs de véhicules automobiles pour le grand confort qu'ils apportent. Or, il est bien connu que ce confort est d'autant plus grand que les ailes de l'assise et/ou du dossier sont plus relevées et maintiennent ainsi plus efficacement le corps dans la position adéquate.

Il est malheureusement également bien connu que des ailes très relevées présentent une gêne notable lorsque l'on désire s'asseoir ou au contraire s'extraire d'un siège baquet (voir JP-A-60.206 742 qui divulgue un dispositif d'escamotage du bord lateral d'un siège de véhicule).

La présente invention a pour but de remédier à cet inconvénient pour un siège baquet du type défini dans le préambule de la revendication 1.

Cette invention a en effet pour objet un dispositif de rabattement de l'aile latérale d'un siège baquet, pour véhicule automobile ou analogue, comportant une nappe élastique munie de deux ailes latérales en saillie et portée par une armature, qui comporte une tige d'entraînement repliée en U renversé dont la base est accrochée à la partie supérieure de l'aile à rabattre de la nappe élastique tandis que ses extrémités sont montées pivotantes sur l'armature, et qui est prolongée à l'une de ses extrémités par un levier de liaison à un dispositif de commande de son déplacement entre une position redressée d'utilisation normale du siège et une position basculée vers l'extérieur de rabattement de l'aile.

L'accès aux sièges peut ainsi être totalement libéré à tout moment quelle que soit la forme des ailes de l'assise et/ou du dossier, ce qui permet de donner à celles-ci la hauteur qui assure le confort optimal.

Le dispositif de commande peut être actionné manuellement ou automatiquement en étant, par exemple, asservi au déplacement de la portière du véhicule. Il peut par exemple être constitué par un câble fixé à une extrémité au levier de liaison et à son extrémité opposée à la portière du véhicule de sorte que le déplacement de cette dernière provoque automatiquement le rabattement de l'aile et dégage l'accès aux sièges.

Le dispositif de commande peut également être constitué par un levier pivotant sur l'armature et relié à une biellette articulée au levier de liaison et passant d'un côté à l'autre de l'élément d'armature.

Un tel dispositif de rabattement peut être monté sur l'une ou l'autre des ailes de la nappe élastique d'assise ou de dossier ou même sur chacune de ces ailes.

L'invention s'étend également à un siège de véhicule comportant ce dispositif et en particulier à un siège double comportant deux nappes élastiques de dossier côte à côte et des dispositifs de rabattement d'aile sur les deux ailes latérales adjacentes de ces nappes, les leviers de commande de ces dispositifs étant articulés à proximité de l'assise et incorporés dans un accoudoir, ce qui permet de les commander simultanément et de transformer le siège double en banquette.

La description ci-dessous de modes de réalisation, donnés à titre d'exemples non limitatif et représentés aux dessins annexés, fera d'ailleurs ressortir les avantages et caractéristiques de l'invention.

Sur ces dessins :
– la Fig. 1 est une vue en perspective schématique, d'une siège baquet comportant un dispositif de rabattement d'aile selon l'invention.
– la Fig. 2 est une vue de détail, à plus grande échelle, en coupe suivant la ligne 2-2 de la Fig. 1;
– la Fig. 3 est une vue analogue à la Fig. 2 d'une variante de réalisation ;
– a Fig. 4 est une vue de côté montrant un dispositif de commande selon une autre variante de réalisation, monté à l'arrière du siège :
– la Fig. 5 est une vue selon la flèche F de la Fig. 4;
– la Fig. 6 est une vue analogue à la Fig. 5 d'une autre variante de réalisation ;
– la Fig. 7 est une vue en perspective du dispositif de rabattement d'aile de la Fig. 6,
– la Fig. 8 est une vue partielle, en perspective, d'un siège double muni de dispositifs de rabattement d'aile permettant sa transformation en banquette.

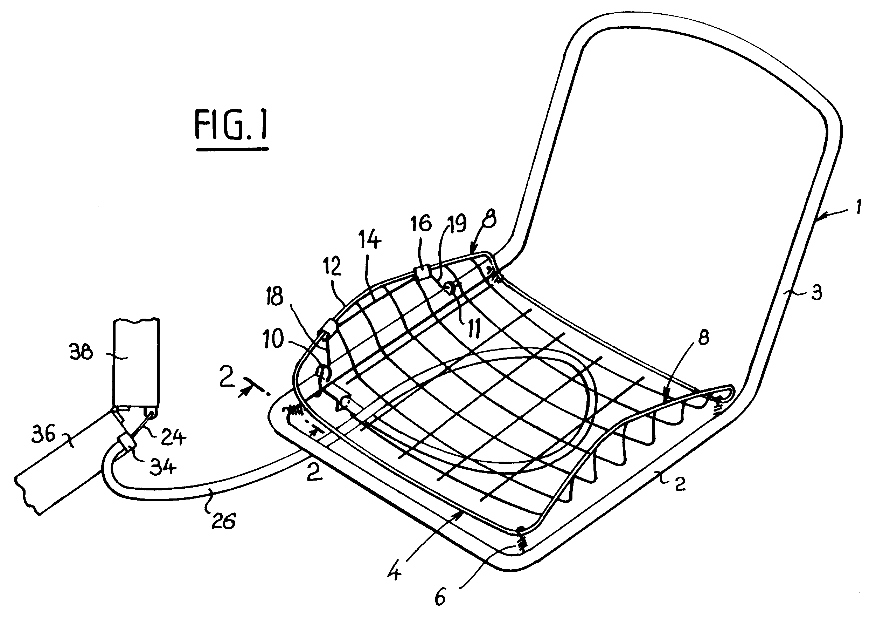

Le siège baquet, représenté schématiquement sur la Fig.1 , comporte une armature 1 qui dans cet exemple de réalisation est constituée par un élément tubulaire mais peut bien entendu avoir toute autre forme. l'élément d'armature 1 est recourbé de façon à constituer un cadre d'assise 2 et un cadre de dossier 3 solidaires l'un de l'autre. Sur le cadre d'assise 2 est montée une nappe élastique 4 qui est reliée au cadre par des ressorts 6 situés par exemple dans chacun des angles du cadre 2.

La nappe élastique 4 est relevée sur les deux côtés latéraux opposés du siège de façon à former deux ailes 8 en saillie par rapport à l'armature 2.

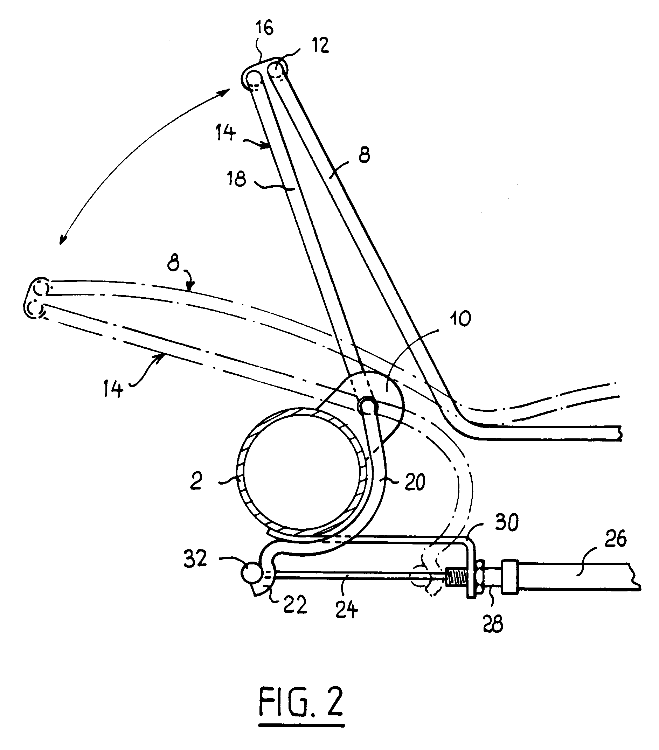

Sur l'un au moins de ses côtés, cette armature d'assise 2 comporte deux pattes, respectivement 10 et 11, dans lesquelles est montée pivotante la partie inférieure d'un organe d'entraînement 14 dont la partie supérieure est reliée au fil supérieur 12 de l'aile latérale 8 de la nappe élastique. L'organe d'entraînement est de préférence constitué, comme représenté sur les dessins, par une tige 14, recourbée en U renversé, qui est reliée au fil 12 de l'aile de la nappe au moyen de clips ou agrafes 16. Les extrémités des branches latérales 18 et 19 de la tige en U 14 sont montées pivotantes dans les pattes 10 et 11, respectivement, mais l'une d'elles, la branche 18 située à l'avant du siège dans le mode de réalisation des Figs 1 et 2, est prolongée par un levier 20 de liaison à un dispositif de commande. De préférence, le levier 20 est incurvé de façon à contourner l'élément d'armature 2 puis à s'écarter sensiblement radialement de ce dernier pour constituer une patte 22 d'accrochage du dispositif de commande.

Dans le mode de réalisation représenté sur les Figs 1 et 2, le dispositif de commande est constitué par un câble 24 monté à l'intérieur d'un flexible 26 qui est fixé, par exemple par l'intermédiaire d'un tendeur de câble 28, sur une ferrure 30 portée par l'élément de l'armature 2. Dans ce cas, la patte 22 comporte de préférence une concavité sur sa face opposée à la ferrure 30 de façon à recevoir un axe 32 fixé à l'extrémité du câble 24 qui traverse cette patte 22. L'extrémité opposée du flexible 26 est fixée en un point approprié du véhicule de façon à permettre une commande facile de la translation du câble 24, c'est à dire de la position du levier 20 et de l'ensemble de la tige 14.

Cette extrémité 34 est par exemple fixée à la carosserie du véhicule sur le montant 36 de la portière 38, le câble 24 étant lui accroché à la portière 38 elle-même (Fig. 1). Ainsi l'ouverture de la portière 38 exerce automatiquement une traction sur le câble 24 qui entraîne la patte 22 vers l'intérieur du siège et fait par suite pivoter le levier 20 ainsi que la tige 14 par rapport à la patte 10 et bien entendu également à la patte 11 (Fig.2). Le pivotement du levier 20 provoque donc automatiquement un basculement de la tige 14 de la position redressée représentée en trait plein sur la Fig.2 à la position rabattue représentée en trait mixte sur cette même figure. L'aile 8 bascule bien entendu en même temps que la tige 14 puisque leurs extrémités supérieures sont rendues solidaires l'une de l'autre par les agrafes 16, de sorte que cette aile se rabat vers l'extérieur au dessus de l'armature 2 et dégage l'accès au siège. Dès que la portière 38 se referme le câble 24 ramène la patte 22, et par suite le levier 20, contre le tube de l'armature 2 tandis que la tige 14 se redresse et que l'aile 8 de la nappe élastique reprend sa position relevée d'utilisation normale du siège.

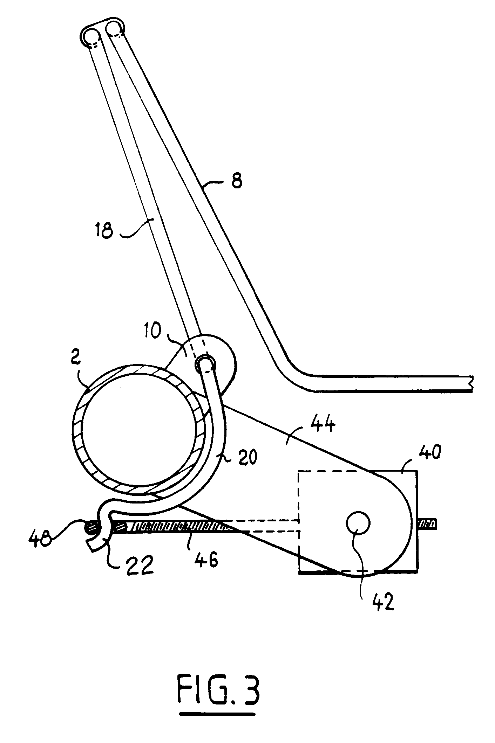

Le basculement de l'aile 8 peut également être commandé comme représenté sur la Fig. 3, au moyen d'un motoréducteur 40 monté pivotant sur un axe 42 porté par une ferrure de fixation 44 solidaire du tube d'armature 2. Le motoréducteur 40 entraîne une tige filetée 46 qui est terminée par un crochet 48 emboîté sur la patte incurvée 22 du levier 20. Le fonctionnement de ce motoréducteur 40 est de préférence commandé, par l'intermédiaire d'une logique de contrôle (non représentée), au moyen d'un interrupteur à fermeture placé à un endroit facilement accessible pour l'utilisateur du siège ou, de préférence, logé dans la feuillure de la portière et actionné par l'ouverture et la fermeture de cette dernière.

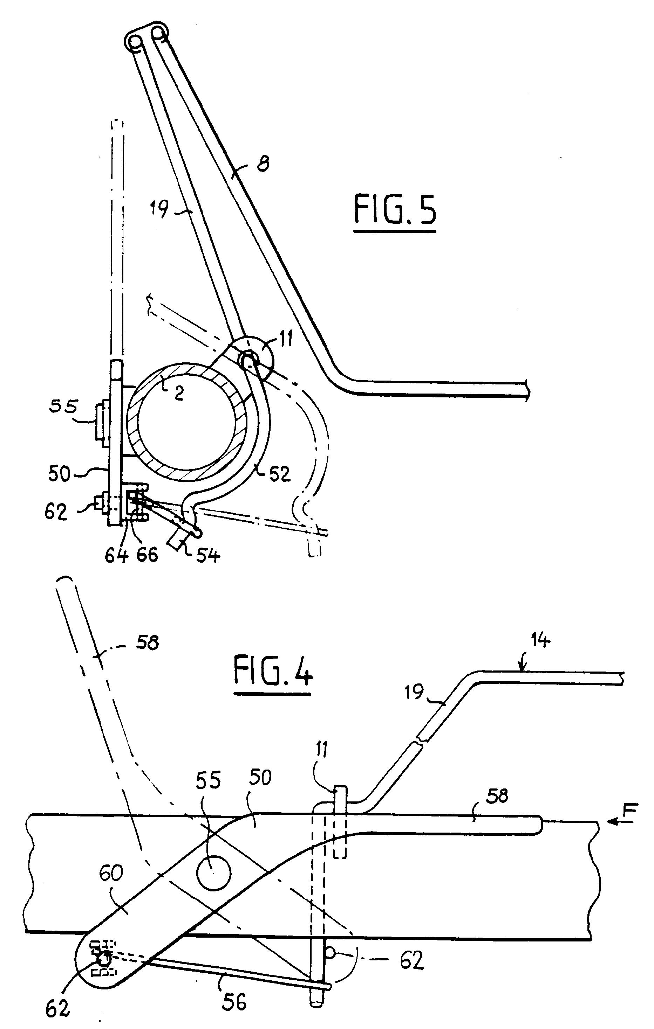

Selon une autre variante de réalisation représentée sur les Figs 4 et 5, le basculement de l'aile est commandé manuellement à l'aide d'un levier de manoeuvre 50 qui est monté pivotant sur l'armature 2, de préférence au voisinage de l'arrière de celle-ci. C'est alors la branche 19 de la tige d'entraînement 14 qui est prolongée pour former un levier de liaison 52 incurvé autour du tube d'armature 2. Ce levier 52 est terminé par une patte radiale 54 qui est sensiblement rectiligne et est reliée, par une biellette 56 passant sous l'armature 2, au levier de manoeuvre 50. Ce levier 50 comporte de part et d'autre de son axe 55 de pivotement sur l'armature 2, un bras de manoeuvre 58 dirigé vers l'avant du siège et un bras 60 de support de la biellette 56, dirigé vers le bas. Ce bras 60 est traversé au voisinage de son extrémité inférieure par un axe 62 portant une chape 64 traversée par un axe 66 sur lequel est montée pivotante l'extrémité de la biellette 56 qui est dirigée à la fois vers l'avant et vers l'intérieur du siège pour rejoindre le levier 52.

Dans la position normale d'utilisation du siège, le bras de manoeuvre 58 est sensiblement parallèle au tube 2 de l'armature comme représenté sur la Fig. 4. Pour faire basculer l'aile 8 il suffit donc d'imprimer à ce bras 58 un déplacement vers le haut qui provoque un pivotement vers le bas du bras 60 et par suite de la chape 64 et repousse la biellette 56 vers l'intérieur du siège. Elle fait alors pivoter le levier 52, et par suite la tige 14 par rapport aux pattes 10 et 11 fixées sur l'armature, entre les positions représentées en trait plein et en trait mixte sur la Fig.5. La tige 14 ainsi que l'aile 8 qui lui est accrochée basculent vers l'extérieur et dégagent l'accès au siège, que ce soit pour permettre à l'utilisateur de quitter son siège ou au contraire de s'y installer. Au cours de ce déplacement, l'extrémité du bras 60 portant la chape 64 a dépassé le plan de pivotement du levier 52 (Fig.4 ) et la biellette 56 est venue en butée sous le tube de l'armature 2, ce qui détermine, du fait de la force de réaction de la nappe, une postion stable du levier 50 dans la position de rabattement de l'aile.

Une légère pression vers l'avant sur le bras 58 du levier 50 suffit alors pour ramener l'aile 8 de la nappe élastique dans sa position normale. En effet dès que cette pression a fait pivoter en arrière le bras 60 et a ramené l'axe 62 en arrière du plan de pivotement du levier 52, le système devient instable. Le levier 50 revient automatiquement dans sa position normale, tandis que la tige 14 et l'aile 8 reprennent leur position initiale redressée.

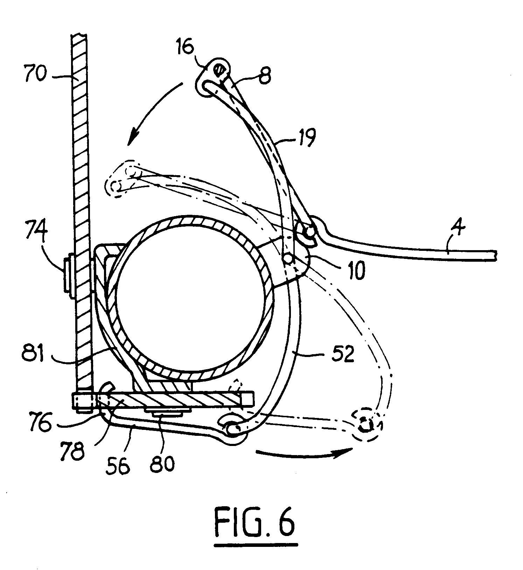

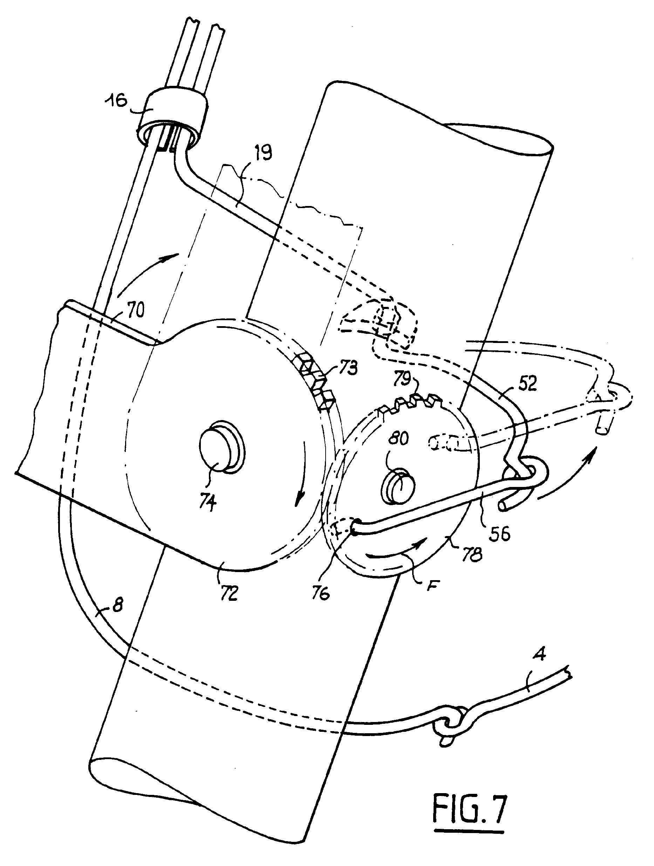

Le levier de commande peut également comme représenté sur les Fig. 6 et 7 ne comporter qu'un seul bras 70 qui est terminé par un disque denté 72 centré sur l'axe 74 de pivotement du bras par rapport à l'armature 1. La biellette 56 est alors articulée à son extrémité 76 opposée au bras 52 sur une roue 78 portant une denture 79 en prise avec la denture 73 du disque 72. La biellette 56 est par exemple recourbée en forme de crochet 76 pour traverser la roue 78 de manière à pouvoir pivoter par rapport à cette roue tout en étant entraînée lors de la rotation de celle-ci. La roue dentée 78 est montée rotative sur un axe 80 fixé sur l'armature 1 sensiblement dans le même plan que l'axe 74, les deux axes étant perpendiculaires entre eux et portés par une ferrure 81 rendue solidaire de l'armature 1.

En position normale de repos du bras de manoeuvre 70, l'extrémité 76 de la biellette 56 se trouve au voisinage du disque denté 72, comme le montrent les figurent 6 et 7 et le levier 52 est proche de l'élément d'armature. Le pivotement du bras 70 fait tourner la roue dentée 78 et entraîne l'extrémité de la biellette 56 sur une trajectoire circulaire indiquée par la flèche F sur la Fig.7. Dans ce mouvement la biellette 56 repousse le levier 52 vers l'intérieur du siège et fait basculer la tige 14 par rapport aux pattes 10 et 11 de la position en trait plein à la position en trait mixte des Figs. 6 et 7.

Avec ce mode de réalisation comme avec les précédents, si l'aile 8 est d'une seule pièce avec le cadre de la nappe élastique, le rabattement de l'aile provoque un gonflement de la partie centrale de la nappe, ce qui offre un confort accrue à l'accessibilité du siège. Les ailes de la nappe peuvent bien entendu être des éléments rapportés articulés sur les bords de la nappe (Fig. 6). De préférence dans ce cas un ressort, non visible sur les Figs 6 et 7, assure le rappel de l'aile en position redressée.

Bien entendu ces dispositifs de commande manuelle peuvent, si désiré, être montés à l'avant du siège et agir sur un prolongement 20 de la branche 18 de la tige 14. De même les dispositifs de commande automatique des deux autres exemples de réalisation peuvent facilement être montés à l'arrière du siège, si nécessaire.

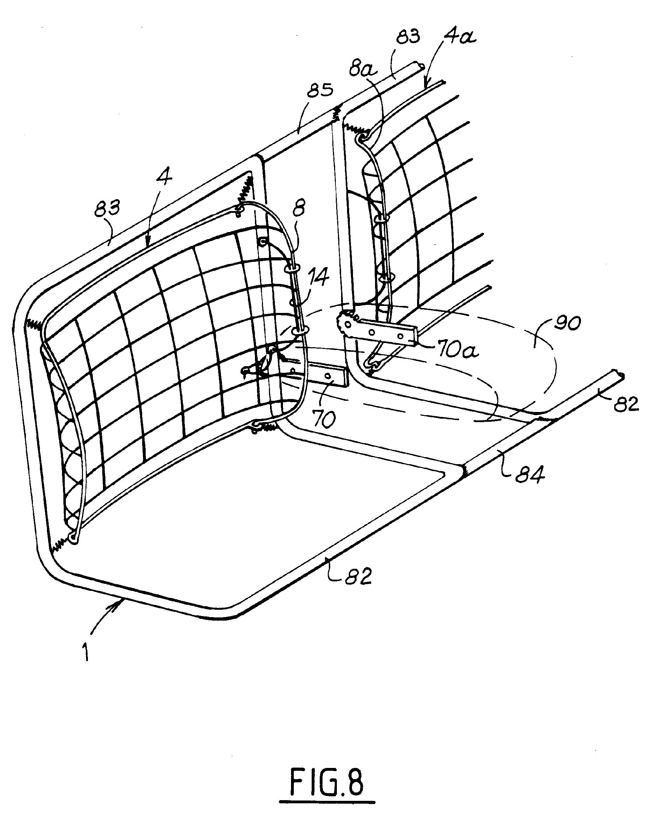

On comprendra aisément que le dispositif de rabattement d'aile de l'invention peut être monté aussi bien sur une assise de siège que sur un dossier. La Fig. 8 montre un exemple de siège double comportant deux nappes de dossier munies chacune d'un dispositif de rabattement.

Le siège représenté sur cette figure comporte en effet une armature 1 formant côte à côte deux cadres de dossier 83 et deux cadres d'assise 82 reliés entre eux par des entretoises 84, 85. Chacun des cadres de dossier porte une nappe élastique 4, 4a ayant des ailes latérales 8, 8a en saillie vers l'avant et un dispositif de rabatttement d'aile selon les figures 6 et 7 est monté sur chacune des deux ailes 8, 8a adjacentes de façon que leur bras de commande 70, 70a soient proches de l'assise et dirigés vers l'avant. Les deux bras 70 et 70a peuvent alors être placés à l'intérieur d'un accoudoir mobile 90 dont le pivotement vers le haut provoque le rabattement des deux ailes 8 et 8a sensiblement dans le plan du reste des nappes, ce qui transforme le siège double en banquette. Le déplacement en sens inverse de l'accoudoir 90, jusque dans la position représentée sur la tige 8, commande le redressement des ailes 8 et 8a et permet aux deux sièges côte à côte de reprendre leur forme de sièges baquets.

Quel que soit le mode de commande du dispositif de l'invention et la place choisie pour son montage, on obtient de manière très simple le basculement de l'aile latérale du siège, ce qui permet de donner à cette aile toute hauteur désirée sans craindre qu'elle ne soit une gêne pour l'accès à la place assise. Bien entendu, le siège peut si nécessaire comporter des moyens de basculement de l'aile sur ses deux côtés latéraux, bien qu'en général seule une aile ait besoin d'être basculée.

## Revendications

1. Dispositif de rabattement d'aile de siège baquet, pour véhicule automobile ou analogue, comportant une nappe élastique (4) munie de deux ailes latérales (8) en saillie et portée par une armature (1), caractérisé en ce qu'il comporte une tige d'entraînement repliée en un U renversé dont la base est accrochée à la partie supérieure de l'aile à rabattre (8), tandis que les extrémités de ses branches (18, 19) pivotent sur l'armature (1), et qui est prolongée par un levier (20, 52) de liaison à un dispositif de commande de son déplacement entre une position redressée d'utilisation normale du siège et une position basculée vers l'extérieur de rabattement latéral de l'aile.

2. Dispositif suivant la revendication 1, caractérisé en ce que la tige d'entraînement (4) est reliée à la partie supérieure de l'aile (8) par des agrafes espacées (16).

3. Dispositif suivant l'une des revendications 1 et 2, caractérisé en ce que le levier de liaison (20, 52) est formé par un prolongement de la tige d'entraînement (14) et est d'une seule pièce avec elle.

4. Dispositif suivant l'une des revendications précédentes, caractérisé en ce que le levier de liaison (20, 52) est incurvé autour de l'élément latéral de l'armature.

5. Dispositif suivant l'une des revendications précédentes, caractérisé en ce qu'il comporte un câble (24) de commande relié d'une part au levier de liaison (20), et d'autre part au battant de la portière du véhicule.

6. Dispositif selon l'une des revendications 1 à 4, caractérisé en ce qu'il comporte une tige filetée (46) accrochée au levier de liaison (20) et entraînée par un système moto-réducteur (40) asservi au mouvement de la portière.

7. Dispositif selon l'une des revendications 1 à 4, caractérisé en ce qu'il comporte un levier (50) de commande pivotant sur l'armature (1) qui est coudé et relié par une biellette (56) articulée au levier de liaison et passant sous cette armature.

8. Dispositif selon l'une des revendications 1 à 5, caractérisé en ce qu'il comporte un levier de commande (70), pivotant sur l'armature (1), qui est relié par un renvoi d'angle (72, 78) et une biellette articulé (56) au levier de liaison (52).

9. Siège baquet pour véhicule automobile ou analogue caractérisé en ce qu'il comporte un dispositif de rabattement d'aile selon l'une des revendications précédentes au moins sur l'une des ailes latérales (8) d'une nappe élastique (4) portée par son armature d'assise (2).

10. Siège baquet pour véhicule automobile ou analogue caractérisé en ce qu'il comporte un dispositif de rabattement d'aile suivant l'une des revendications précédentes, sur l'une au moins des ailes (8) d'une nappe élastique (4) portée par son armature de dossier.

11. Siège suivant la revendication 10, caractérisé en ce qu'il comporte sur la même armature générale deux nappes élastiques de dossier (4, 4a), à ailes relevées, placées côte à côte, et deux dispositifs de rabattement d'aile montées sur les ailes adjacentes (8, 8a) de ces deux nappes avec leurs leviers de commande (70, 70a) parallèles, voisins de l'assise et inserrés dans un accoudoir pivotant, de sorte que le redressement de cet accoudoir provoque le rabattement des deux ailes et transforme le siège double en une banquette.

**Patentansprüche**

1. Umlegvorrichtung für kanten eines Schalensitzes für kraftfahrzeuge oder ähnliches, mit einer elastischen Schale (4), die zwei vorspringende und durch einen Rahmen (1) gehaltene Seitenkanten (8) aufweist, dadurch **gekennzeichnet,** daß sie eine umgekehrt-U-förmig gebogene Mitnehmerstange aufweist, deren Basis am oberen Teil der umzulegenden Kante (8) verankert ist, während die Enden der Schenkel (18,19) auf dem Rahmen (1) schwenkbar sind, und die verlängert wird durch einen Hebel (20,52) zur Verbindung mit einer Steuereinrichtung für ihre Verstellung zwischen einer aufgerichteten Stellung für den normalen Gebrauch des Sitzes und einer seitlich nach außen umgeklappten Umlegstellung der kante.

2. Vorrichtung nach Anspruch 1, dadurch **gekennzeichnet,** daß die Mitnehmerstange (4) mit dem oberen Teil der Kante (8) über in Abstand angeordnete Klammem (16) verbunden ist.

3. Vorrichtung nach Anspruch 1 oder 2, dadurch **gekennzeichnet,** daß der Verbindungshebel (20, 52) durch eine Verlängerung der Mitnehmerstange (24) gebildet wird und in einem Stück mit dieser ausgebildet ist.

4. Vorrichtung nach einem der vorstehenden Ansprüche, dadurch **gekennzeichnet,** daß der Verbindungshebel (20,52) um das Seitenteil des Rahmens herum gekrümmt ist.

5. Vorrichtung nach einem der vorstehenden Ansprüche, dadurch **gekennzeichnet,** daß sie ein Steuerkabel (24) aufweist, das einerseits mit dem Verbindungshebel (20) und andererseits mit dem Türflügel des Fahrzeugs verbunden ist.

6. Vorrichtung nach einem der Ansprüche 1 bis 4, dadurch **gekennzeichnet,** daß sie eine Gewindestange (46) aufweist, die an dem Verbindungshebel (20) verankert ist und durch einen Getriebemotor (40) angetrieben wird, der durch die Bewegung der Tür getriggert wird.

7. Vorrichtung nach einem der Ansprüche 1 bis 4, dadurch **gekennzeichnet,** daß sie einen Steuerhebel (50) aufweist, der schwenkbar auf dem Rahmen (1) angeordnet und abgewinkelt und über eine schwenkbare Anlenkstange (56) mit dem Verbindungshebel verbunden ist und unter dem Rahmen hindurchläuft.

8. Vorrichtung nach einem der Ansprüche 1 bis 5, dadurch **gekennzeichnet,** daß sie einen schwenkbar auf dem Rahmen (1) angeordneten Steuerhebel (70) aufweist, der über ein Winkelgetriebe (72,78) und eine schwenkbare Anlenkstange (56) mit dem Verbindungshebel (72) verbunden ist.

9. Schalensitz für Kraftfahrzeuge oder ähnliches, dadurch **gekennzeichnet,** daß er eine Kanten-Umlegvorrichtung nach einem der vorstehenden Ansprüche wenigstens an einer der seitlichen Kanten (8) einer von seinem Sitzrahmen (2) gehaltenen elastischen Schale (4) aufweist.

10. Schalensitz für Kraftfahrzeuge oder ähnliches, dadurch **gekennzeichnet,** daß er eine Kanten-Umlegvorrichtung nach einem der vorstehenden Ansprüche an wenigstens einer der Kanten (8) einer auf seinem Rückenlehnen-Rahmen gehaltenen elastischen Schale (4) aufweist.

11. Sitz nach Anspruch 10, dadurch **gekennzeichnet,** daß er auf dem gemeinsamen Grundrahmen zwei elastische Rückenlehnen-Schalen (4,4a) mit vorspringenden Seitenkanten aufweist, die Seite an Seite angeordnet sind, und daß zwei Kanten-Umlegvorrichtungen an den aneinandergrenzenden Kanten (8,8a) dieser beiden Schalen angeordnet sind, deren Steuerhebel (70, 70a) parallel zueinander in der Nähe des Sitzes angeordnet und derart in eine schwenkbare Armlehne eingefügt sind, daß das Umlegen der Armlehne das Umlegen der beiden Seitenkanten bewirkt und den Zweifach-Sitz in eine Bank verwandelt.

**Claims**

1. Device for tilting the cheek of a bucket seat, for a motor vehicle or the like, comprising a resilient squab frame (4) provided with two projecting side cheeks (8) and supported by a framework (1), characterized in that it comprises a pull rod (14) bent into an inverted U the base of which is attached to the upper part of the cheek to be tilted (8), while the ends of its arms (18, 19) pivot on the framework (1), and which is extended by a connecting lever (20, 52) to a device for controlling its displacement between a straight position for normal use of the seat and a position tilted towards the outside for lateral lowering of the cheek.

2. Device according to claim 1, characterized in that the pull rod (14) is connected to the upper part of the cheek (8) by spaced clips (16).

3. Device according to one of claims 1 and 2, characterized in that the connecting lever (20, 52) is formed by an extension of the pull rod (14) and is integral with it.

4. Device according to one of the preceding claims, characterized in that the connecting lever (20, 52) is curved around the inside of the lateral element of the framework.

5. Device according to one of the preceding claims, characterized in that it comprises a control cable (24) connected on the one hand to the connecting lever (20), and on the other hand to the door of the vehicle.

6. Device according to one of claims 1 to 4, characterized in that it comprises a threaded rod (46) attached to the connecting lever (20) and driven by a geared motor system (40) controlled by the movement of the door.

7. Device according to one of claims 1 to 4, characterized in that it comprises a control lever (50) pivoting on the framework (1) which is bent and attached by an articulated link rod (56) to the connecting lever and passing under this framework.

8. Device according to one of claims 1 to 5, characterized in that it comprises a control lever (70), pivoting on the framework (1), which is connected by an angular gear (72, 78) and an articulated link rod (56) to the connecting lever (52).

9. Bucket seat for a motor vehicle or the like, characterized in that it comprises a device for tilting the cheek according to one of the preceding claims, on at least one of the side cheeks (8) of a resilient squab frame (4) supported by its support framework (2).

10. Bucket seat for motor vehicle or the like, characterized in that it comprises a device for tilting the cheek according to one of the preceding claims, on at least one of the cheeks (8) of a resilient squab frame (4) supported by its framework for the back of the seat.

11. Seat according to claim 10, characterized in that it comprises on the same general framework two resilient frames for the seat backs (4, 4a), with raised cheeks, placed side by side, and two devices for tilting the cheek, mounted on adjacent cheeks (8, 8a) of these two frames with their parallel control levers (70, 70a), close to the base and inserted in a pivoting arm rest, so that the lifting of this arm rest causes the tilting of the two cheeks and converts the double seat into a bench seat.

FIG.1

## FIG. 2

FIG. 3

FIG.5

FIG.4

FIG.6

FIG.7

# FIG.8